# EUROPEAN PATENT SPECIFICATION

(11) **EP 2 621 208 B1**
(45) Date of publication and mention of the grant of the patent: **26.03.2014**
(21) Application number: 12290031.9
(22) Date of filing: 27.01.2012
(51) Int. Cl.: H04W 16/18

(54) **Method for determining cell configuration parameters in a wireless telecommunication network**
Verfahren zur Bestimmung der Zellkonfigurationsparameter in einem drahtlosen Telekommunikationsnetzwerk
Procédé pour déterminer les paramètres de configuration de cellule dans un réseau de télécommunication sans fil

(43) Date of publication of application: 31.07.2013
(73) Proprietor: Alcatel Lucent, 75007 Paris (FR)
(72) Inventor: Karla, Ingo, 46514 Schermbeck (DE)
(74) Representative: Wetzel, Emmanuelle

(56) References cited:
- WO-A1-03/045094
- WO-A1-03/079574
- US-A- 6 128 500

## Description

The invention relates to the field of mobile telecommunication, more particularly to simulating network conditions in the network.

### Background and related art

Cell configuration parameters are used in wireless cellular digital telecommunication networks for data transmissions in the network. The parameters define frequencies to be used for data transmissions and transmission times. Other parameters can be antenna parameters and/or handover related parameters. In general, network conditions are defined by handover related parameters. In general, network conditions are defined by the parameters used for data transmissions. The parameters can be optimized for decreasing interferences and increase the quality of service offered by the network to users.

WO 03/045094 A1 describes systems and methods which provide communication network antenna pattern configuration for optimized network operation. Preferably, a statistical smart antenna configuration is provided in which antenna patterns associated with various base stations of the communication network are configured to capitalize on the complex morphology and topology of the service area in providing optimized communications. Antenna patterns are preferably configured using merit based determinations, based upon link propagation conditions such as associated with the complex morphologies and topologies of the service area, to aggressively serve areas which are best served thereby while not serving areas which are best served by other network systems.

WO 03/079574 A1 describes a method and a software product at a mobile telecommunication and data communication system. More exactly the method intends to make possible an efficient pilot channel planning in a CDMA-based cellular radio network and includes the steps: Division of the radio network into subareas, estimation of the attenuation of the radio signal to subareas, calculation of an objective function to get a numerical value regarding the quality of the radio network, or part of the radio network, on basis of a configuration of pilot channel power output where the objective function includes a coverage related term and a capacity related term and optimization with the aim to configure the power output values of pilot channels so that the numerical value of the objective function is maximized.

US 6 128 500 A describes a method and system for optimizing system capacity and allocation in a CDMA cellular communication system which obtains a current call volume and associated call characteristics for each of a plurality of cell sites in the system, and estimates effective boundaries for each of the plurality of cell sites to minimize the weighted sum of powers received at selected base stations. Selection of base stations can include highly loaded sites and adjoining cell sites. System parameters are then controlled to effect the estimated cell site boundaries. Thus, the present invention allows for dynamic shrinking and enlarging of cell boundaries to enhance the system capacity advantages of CDMA while maintaining contiguous coverage and avoiding coverage holes.

### Summary

It is an object of the present invention to provide an improved method for simulating network conditions for a plurality of cells in a wireless cellular digital telecommunication network, an improved network entity, and an improved computer program product according to the independent claims. Embodiments of the invention are given in the dependent claims.

The invention relates to a method for simulating network conditions for a plurality of cells in a wireless cellular digital telecommunication network by using several candidate sets of cell configuration parameters. The method comprises dividing each cell of the plurality of cells into at least one virtual sub-area. The virtual sub-area is used only for simulating network conditions according to embodiments of the invention. The virtual sub-area has no effect on data transmissions in the telecommunication network. Each cell of the plurality of cells can be divided into only one virtual sub area or several virtual sub-areas. The more virtual sub-areas are created for each cell the more detailed the simulation is. It is also possible that the plurality of cells is divided into different numbers of virtual sub-areas. For example a first cell may be divided into just one virtual sub-area while another cell may be divided into three virtual sub-areas and yet another cell may be divided into seven virtual sub-areas.

After dividing the plurality of cells into the at least one virtual sub-area traffic conditions and available resources for each virtual sub-area are determined. Determining traffic conditions comprises determining a quality of service offered to mobile devices being located in the respective virtual sub-area, interferences occuring in the respective virtual sub-areas and traffic throughput in the respective sub-areas for example. The quality of service indicates how good requests from mobile devices being located in the respective virtual sub-area can be processed by the network. For example the speech quality for a telephone conversation by using the telecommunication network is rather low when the quality of service is low. Determining the traffic conditions may also comprise determining a traffic load. The traffic load is an indicator for how much traffic is transmitted from and to mobile devices being located in the respective virtual sub-area. The available resources that are determined may for example be resource blocks that consist of a time period and a frequency range. A resource block defines a frequency range that is used for wireless telecommunication in the respect virtual sub-area for the defined time period.

Further, candidate sets of cell configuration parameters are evaluated by using the determined traffic conditions and the available resources. In other words, the candidate sets are evaluated by considering the determined traffic conditions and the available resources. Considering the determined traffic conditions and the available resources can for example mean that the candidate sets are evaluated in order to optimize traffic conditions and only using the available resources. For example the candidate sets do not comprise cell configuration parameters that would use resources that are not available for data transmissions in the telecommunication network. For example the candidate sets can be evaluated based on the traffic load, the quality of service and interferences determined for the virtual sub-areas. Each of the candidate sets is evaluated in order to optimize traffic conditions by using only the available resources.

Then, the network conditions in the plurality of cells are simulated for each candidate set. In other words, when the simulation is performed, offline calculations are performed. The simulation is performed based on the virtual sub-areas. In other words, the network conditions in the plurality of cells are simulated for each virtual sub-area and for each candidate set. Preferably the network conditions are simulated per cell and afterwards for the plurality of cells in a whole. This is advantageous because first the network conditions are simulated for each cell individually and then for the region consisting of the plurality of cells. Network conditions in neighboring cells may influence each other because of interferences. Hence, when simulating the network conditions per cell interferences are not yet considered. Interferences are simulated when simulating the network conditions for the whole region consisting of the plurality of cells.

The simulated network conditions are compared. This means that the simulated network conditions are compared with each other and/or with the current network conditions that are defined by the traffic conditions and the available resources. A replacement set of cell configuration parameters is determined based on the results of the comparison. The replacement set of self-configuration parameters is preferably the candidate set that has the best simulation results. For example the best candidate set optimizes network conditions in the telecommunication network the most in comparison with the other candidate sets. Indicators of how good network conditions are may for example be the quality of service, interferences, energy consumption. The energy consumption is an indicator for the energy consumed by the base stations of the telecommunication network for transmitting and processing data. A base station is understood herein as a network entity serving at least one cell. However, a base station may also serve a plurality of cells. A cell may also be referred to as a sector.

The replacement set of cell configuration parameters may also be referred to as the new set of cell configuration parameters. The replacement set of cell configuration parameters is used in the plurality of cells for data transmissions.

Other indicators for determining how good the simulated network conditions are may for example be the possible data throughput in the plurality of cells. It is to be noted that simulation is performed by using the virtual sub-areas. The virtual sub-areas are advantageous in comparison to simulations performed only for cells because simulation is performed more precisely. By using the virtual sub-areas a simulation is performed for several sub-areas for one cell preferably. This is more precise than performing the simulation just for the cell as a whole.

For determining the best set the various factors that are considered for determining the simulation results, such as the quality of service, the data throughput and/or the interference conditions are taken into account with different or the same weighting factors. For example the quality of service is weighted very high as well as the data throughput. The energy consumption may be weighted not as high as the both previously mentioned indicators. The best candidate set is understood herein as the candidate set that optimizes the network conditions in the plurality of cells. Optimizing the network conditions comprises improving energy consumption, and/or quality of service, and/or data throughput, and/or interference conditions.

According to embodiments of the invention the cell configuration parameters comprise transmission times, transmission frequencies, transmission powers, handover related parameters, and/or antenna parameters. It is to be noted that the various parameters are preferably different for each cell. For example it is advantageous to use the same transmission frequencies at different times in neighboring cells. Transmission frequencies shall be understood herein as frequency bands or sub-bands. In other words, transmission frequencies are transmission frequency ranges. Handover related parameters may for example be handover thresholds and/or handover trigger times. In general, handover related parameters may be any parameter related to a handover procedure performed in the telecommunication network. Antenna parameters may for example be the antenna tilt or transmission direction of the antenna.

According to embodiments of the invention the network conditions comprise interferences and/or traffic load.

According to embodiments of the invention evaluating the candidate sets comprises determining a traffic load for each virtual sub-area and determining an amount of required resources for each virtual sub-area based on the traffic load of the respective virtual sub-area. The amount of required resources can for example be determined by determining how much traffic is generated by mobile devices being located in the respective virtual sub-area. The generated traffic is directly related to the required resources. The more traffic is generated in the respective virtual sub-area the more resources are required in the virtual sub-area. At least one data transmission efficiency indicator is determined for each virtual sub-area.

The term "data transmission efficiency" may also be referred to as "resource efficiency".

The data transmission efficiency indicator takes into account interferences and indicates how much data can be transmitted for a frequency range during a time period. In other words the data transmission efficiency indicator indicates the efficiency of a resource block for data transmissions. The data transmission efficiency can for example be influenced by interferences and/or transmission power. For example when there is a high amount of interferences the data transmission efficiency decreases. When the base station of the respective virtual area is located relatively far away from the respective virtual sub-area data transmission efficiency may also decrease. The data transmission efficiency may also be referred to as a resource efficiency.

A possible data transmission traffic for each virtual sub-area is calculated by using the data transmission efficiency indicator and the amount of available resources. The simplest example for this calculation would be that multiplying the data transmission efficiency indicator with the amount of available resources yields the possible data transmission traffic. The possible data transmission traffic is the data transmission traffic that can be transmitted when using the candidate set that is currently evaluated. It is to be noted that each candidate set of the several candidate sets is evaluated on its own.

The candidate sets are evaluated based on a comparison between the possible data transmission traffic and the traffic load, and/or a comparison between the required resources and the available resources. For example the possible data transmission traffic is compared with the traffic load. Another example is that the available resources are compared with the amount of required resources. In other words, the candidate sets are evaluated by considering network needs. The candidate sets comprise cell configuration parameters, which may replace the current cell configuration parameters.

Simulating the network conditions comprises according to embodiments of the invention determining an energy amount that would be consumed for data transmissions, and/or a quality of service indicator, and/or a throughput indicator for the candidate set, for which the simulation is performed, for each virtual sub-area. The quality of service indicator may indicate a quality of service that can be offered to users in the respective virtual sub-area when applying the respective candidate set for wireless telecommunication. The throughput indicator may indicate a possible throughput that may be reached for the virtual sub-area when applying the candidate set for wireless telecommunication.

Further simulating the network conditions comprises determining a rating indicator for the candidate set, for which the simulation is performed, for each virtual sub-area taking into account the energy amount, and/or the quality of service indicator, and/or the throughput indicator. The rating indicator may consider at least one of the above mentioned criteria or all of them. For example for determining the rating indicator certain criteria may also be considered as more significant than others. For example the quality of service indicator is considered as more significant than the energy amount.

Comparing the network conditions comprises comparing the rating indicators of the candidate sets. In other words, the candidate sets are compared by using the rating indicators. By using the rating indicators for comparing the candidate sets the energy amount, and/or the quality of service indicator, and/or the throughput indicator are considered for comparing the network conditions.

According to embodiments of the invention the data transmission efficiency indicator takes into account intra-cell interferences and inter-cell interferences. Intra-cell interference herein means interferences that are caused inside the cell. For example wireless telecommunication with a first mobile entity may cause interferences for a second mobile entity. Inter-cell interferences herein mean interferences in a first cell that are caused by data transmissions in a second cell.

According to embodiments of the invention calculating the possible data transmission traffic comprises multiplying the data transmission efficiency indicator with the number of required resources.

According to embodiments of the invention constraints are considered when evaluating the candidate sets and when simulating the network conditions. Constraints may for example be unchangeable parameters, unusable frequencies or other constraints being not changeable by the method according to embodiments of the invention. For example this method is performed by a network entity and another network entity, for example a base station of another vendor, does not accept changes performed within this method. For example constraints may also be that certain frequencies can be used for data transmissions in the respective cells.

According to embodiments of the invention the constraints comprise at least fixed cell configuration parameters of at least one cell of the plurality of cells, and/or radio-frequencies that are allowed to be used for wireless telecommunication in the plurality of cells.

According to embodiments of the invention the method is performed by a first network entity. The first network entity is associated with a first cell. The plurality of cells comprises the first cell and a neighboring area of the first cell. The neighboring area may comprise any cell that is considered to be necessary for optimizing network conditions. This may for example be second, third or fourth neighbours.

According to embodiments of the invention the neighboring area comprises direct neighbors of the first cell and neighbors of the direct neighbors.

According to embodiments of the invention information is received from base stations of the plurality of cells for determining the traffic load and/or the required resources.

According to embodiments of the invention the traffic load for each virtual sub-area, the at least one data transmission efficiency indicator for each virtual sub-area, and/or the network conditions are received from base stations. This is advantageous because the network entity performing the method steps simply receives the previously mentioned information from base stations. Base stations are adapted for measuring the traffic load, the at least one data transmission efficiency indicator, and/or the network conditions.

According to embodiments of the invention the simulation is performed based on previously performed measurements. The previously performed measurements may be performed by the same network entity performing also the other method steps. The previously performed measurements may also be performed by base stations. In this case the previously performed measurements may be stored in a database or transmitted to the network entity performing the other method steps.

In another aspect the invention relates to a network entity of a wireless cellular digital telecommunication network. The network entity comprises means for dividing each cell of the plurality of cells into virtual sub-areas, means for determining traffic conditions and available resources for each virtual sub-area, means for evaluating the candidate sets of cell configuration parameters by using the determined traffic conditions and the available resources, means for simulating the network conditions in the virtual sub-areas for each candidate set, means for comparing the simulated network conditions, means for determining one of the candidate sets as the best candidate set by using the results of the comparison, and means for using the best candidate set for telecommunication in the plurality of cells.

In yet another aspect the invention relates to a computer program product comprising instructions that when being executed cause a network entity to perform a method according to embodiments of the invention.

The following description explains embodiments of the invention in a more detailed way.

### 1) Generic classification of parameters according to their effects

1) In order to achieve a generic solution, a generic prediction model technique, which is applicable or directly adaptable to many different use cases in self-organizing networks (SON), the different cell-parameter variation possibilities are treated generically according to their main effect:
   a) Parameter variations which affect the area, within which the mobiles are (resultingly) assigned to a particular cell.
      These effects include: Handover parameter variations (e.g. for LTE), BIAS (HetNet cell range extension), Basestation transmission power, Tilt of the basestation antenna, ...
      The size of this area affects the amount of offered input traffic which shall be served by that particular cell.
   b) Parameter variations which affect the amount or efficiency of the available resources for one cell:
      These effects include: Amount of available frequency or time-fraction resources (Width or amount of assigned frequency bands, amount of usable Physical-Resource-Blocks, frequency ICIC, time ICIC, LTE-A Almost Blank Subframes.)
      Including the required handling of inter-cell interference issues, how much one cell affects or is affected by the interference on a particular resource by the use (or non-usage) of that resource in a neighbouring cell.
**2) Internal usage of "Virtual Sub-Areas"**

Cell internally, the cell area is virtually sub-divided into several smaller virtual sub-areas. Each of these virtual sub-areas consists of a part of the complete cell areas. There is one virtual centre area and one separate virtual sub-area towards each of the neighbour cell. As one realisation example, a border sub-area of Cell A towards Cell B is that area within which the mobile terminals are served by Cell A and within which the (e.g. Pilot) radio channel from Cell B is the strongest neighbour within a certain dB-signal strength window (e.g. the channel from Cell B is by e.g. 2 dB weaker than the channel from the serving Cell A). The cell scheduler knows the radio channel properties of its own mobiles and can thus create the (average) data, properties, within these virtual sub-areas.

Within the internal calculations, Internally, the user traffic and the resources are treated separately for the virtual sub-areas (and are thereafter convoluted to obtain the full cell behaviour). Where possible, precise sub-area data can optionally be exchanged between cells, but it is also possible to use the standard inter-cell exchanged information only and estimate the properties of the virtual sub-areas, e.g. by assuming average values when no precise information can be obtained.

When calculating the effects of a certain parameter variation, then the effect of this parameter variation is calculated (modelled) with respect to its impact to particular sub-areas. The sub-area model has the advantage, that the effects of parameter variations are limited to few selected sub-areas only, while the rest of the cells remain (basically) non-affected.

Thereby, a variation of the "cell area" affecting parameters shift input traffic between the border sub-areas from one cell to the attaching sub-area of the neighbouring cell.

A variation of the "resource affecting parameters" alters the amount of resources and additionally -via inter-cell interferences- the "resource efficiency" as outlined in the next paragraph.

### 3) Virtual Resource Efficiencies as a generic describing tool

Within the internal calculations, as a tool an internal variable "Resource Efficiency" is introduced. This variable describes, how well radio data can be delivered on a certain resource (e.g. on a certain frequency-part) and in a certain area (e.g. within a cell or within a certain sub-area of a cell). It shall be noted, that this variable does not (necessarily) need to have correct absolute values; it is sufficient if relative values are used describing a relation between different areas and between different resources, so that based on these relative values decisions can be made how to e.g. shift resources between cells.

Within the cell internal calculation, the cell creates values for virtual resource efficiencies for the following separate areas and resources:
1) Distinction whether or not a particular resource is "interference coordinated" or not
   a) Virtual Resource Efficiency when the closest neighbour is creating inter-cell interference on that resource
      (under the currently present traffic load situation in this neighbouring cell)
   b) Virtual Resource Efficiency when the closest neighbour is not creating any inter-cell interference on that
      resource, because that neighbouring cell does not use this resource, the neighbouring cell is restricting it.
2) Spatial distinction, separate values for the cell internal virtual sub-areas
   - There are cell internally different resource efficiencies created for each of the virtual sub-areas within the
      cell as described above.

These "Virtual Resource Efficiencies" are a generic description, which allows to reflect in a generic way several characteristic aspects of a radio network cell:
1) These various virtual resource efficiency values are created for each cell individually, considering and reflecting the actual situation in and around that cell
2) These resource efficiencies reflect the current traffic load and the current inter-cell interference situation
3) Via the separate handling of inner-cell and outer-cell areas, these resource efficiencies reflect also the resulting cell scheduler policy, i.e. the fairness characteristics how the cell scheduler priorizes the cell centre and cell border users.

### 4) Virtual Scheduler for assessing an assumed new parameter set

A virtual scheduler is predicting, how well the cell would be able to handle a new situation under the assumption that a new set of configuration parameters (see above: different resources, different cell areas) would be installed in the real system.

The Virtual Scheduler then performs the following calculations:
2. Calculating the new traffic amount in all the sub-areas of a cell according to traffic shift between the border subareas of two neighbouring cells according to the variation of the cell "cell-border-modifying SON parameter (see above)",
3. Assuming the new candidate resource distribution in the cells in the local area, determine then how many resources are available, and how many of these (and where) benefit from no direct neighbour interference.
4. Assume to serve virtually all the offered input traffic and calculate how many resources the cell would need to be able to fully serve all requested input traffic. For this resource wish calculation, (in the most simple form) the following approximating basic equation be used:
   CarriedTraffic = ResourceEfficiency * NumberOfResources Thereby this cell-resource-wish calculation is first done for each sub-area separately and in that sub-are the "good" resources (those who do not suffer inter-cell interference) are taken first, and the remaining traffic -if any- is thereafter served by the other resources, by those resources which suffer inter-cell interference from the nearest neighbouring cell.
   Then the virtual wishes from all sub-areas are added to obtain the total number of resources (e.g. LTE-PRBs) which would be needed by this cell to fully serve the new traffic amount under the given resource-distribution and the given traffic load situation in the local area. P.S.: Note that this generic virtual scheduler needs for security some special handling of special cases, e.g. when extreme parameter settings or rounding issues result in that certain effects need to be cropped at the limit (e.g. traffic cannot get smaller than nothing etc.)

Although all scheduler parameters can -in theory- be set manually, it would be highly beneficial that within this scheduler, the SON-system itself shall use some self-learning and automatic-self-calibration techniques. The above simple and GENERIC scheduling approach characterizes in a generic way the typical behaviour of cellular networks basically independent of the technology behind and independent of the actual cell layout, the scenario and its traffic load situation. Via self learning and via self adaptation, parameters in the virtual scheduler are then adapted automatically to fit precisely the particular technology, cell-layout, interference and traffic-load situation.

### 5) Prediction of System Performance and of Energy Consumption

The above virtual scheduler calculates (predicts) for an assumed candidate parameter offline, how many (i.e. fine-granular) resources (e.g. how many PRBs) would be needed to fully serve all the requested input traffic and simultaneously also which e.g. (maximum) power is used by the cells. This then allows to approximate for the particular set of candidate parameters:
1) The averaged system throughput and average the user experienced quality of service
   via comparing the actually available resources with the virtually wished amount of resources.
   Assuming e.g.
   a) that all users can fully be served if enough resources are available
   b) that the service quality of the users is degraded by a certain amount (e.g. linear percentage) if the cell does
      not have enough resources
2) The energy consumption of the system: It is calculated which amount of resources are available in a cell, the (maximum) power level and the actual "resource usage percentage" (= which amount of the time an available resource is actually being used or scheduled on average). These information are then the basis to estimate the relative energy consumption of a the system and to compare the energy consumption of different possible candidate parameter sets. A simple energy model (e.g. Power consumption is proportional to the above parameters) is working fine, but a more detailed energy model can be taken based on the input values.

These performance and energy contributions can then be convoluted to a metric, e.g. to create a single combined rating value, which is then used by the candidate parameter variation algorithm to select the best rated parameter set.

Also in this metric-value determination, there are best used some calibrations, normalisation and self-learning techniques, in order to keep the metric procedure stable and system-independent (the operator does then only have to define the desired strategy) and the metric-determination then adapts itself automatically to the given system situation.

### Brief description of the drawings

- Fig. 1: is a schematic view of a wireless telecommunication network comprising a plurality of cells being divided into virtual sub-areas,
- Fig. 2: is a flow diagram of method steps according to embodiments of the invention,
- Fig. 3: is a flow diagram of method steps according to embodiments of the invention,
- Fig. 4: is a flow diagram of method steps according to embodiments of the invention,
- Fig. 5: is a flow diagram of method steps according to embodiments of the invention being performed for a virtual sub-area,
- Fig. 6: is a flow diagram of method steps according to embodiments of the invention,
- Fig. 7: is a flow diagram of method steps according to embodiments of the invention, and
- Fig. 8: is a block diagram of a network entity according to embodiments of the invention.

### Detailed description

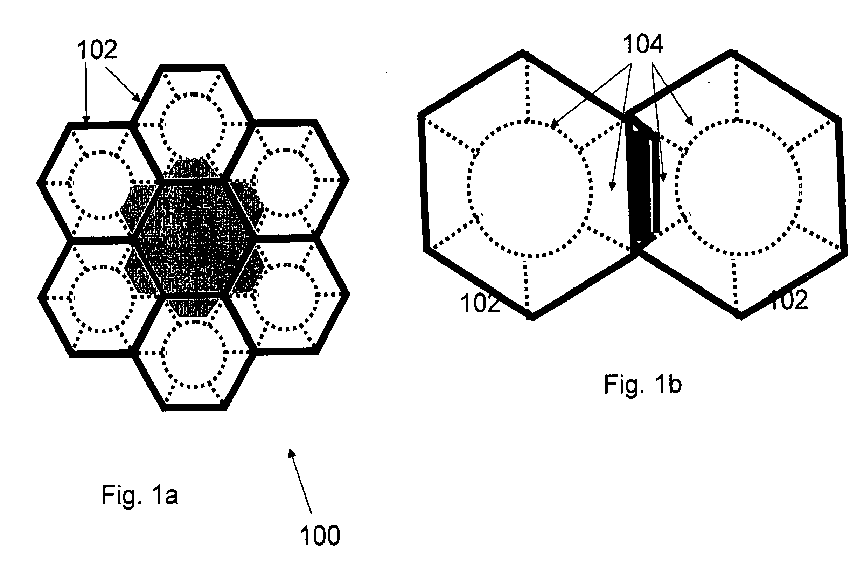

Fig. 1a is a schematic view of a digital cellular wireless telecommunication network 100 comprising a plurality of cells 102. Each cell 102 of the plurality of cells is served by a base station (not depicted). However, a base station may serve more than one cell 102. Each cell 102 consists in Fig 1 a of seven virtual sub-areas 104. The virtual sub-areas are used for simulating network conditions by using evaluated candidate sets determined by a central network entity (not depicted). Using the virtual sub-areas 104 for simulating network conditions is advantageous because the network conditions are not changed. Hence, simulating network conditions with a candidate set that causes for example unwanted interferences is only simulated and no user in the wireless telecommunication network 100 is subject to these interferences.

In Fig. 1a it is shown that using the virtual sub-areas 104 is advantageous for determining interference conditions in the cells 102. The centre cell in fig. 1a uses for example certain resources with a certain transmission power. One of the evaluated candidate sets could for example define a lower transmission power for these resources or even that these resources are not used for data transmissions in the centre cell. In this case the simulation results show that interferences in the virtual sub-areas directly neighbouring the centre cell experience less interferences, which increases the data transmission efficiency and/or the quality of service.

Fig. 1b shows two cells 102 in greater detail. Here it is shown how a change of a transmission power in a first cell changes the cell sizes of the first cell and a second cell that neighbors the first cell. Increasing the transmission power increases the cell size of the first cell and decreases the cell size of the second cell. The mobile units being located in the region which is shifted from the second cell to the first cell cause a certain traffic load. This traffic load is shifted from the second cell to the first cell.

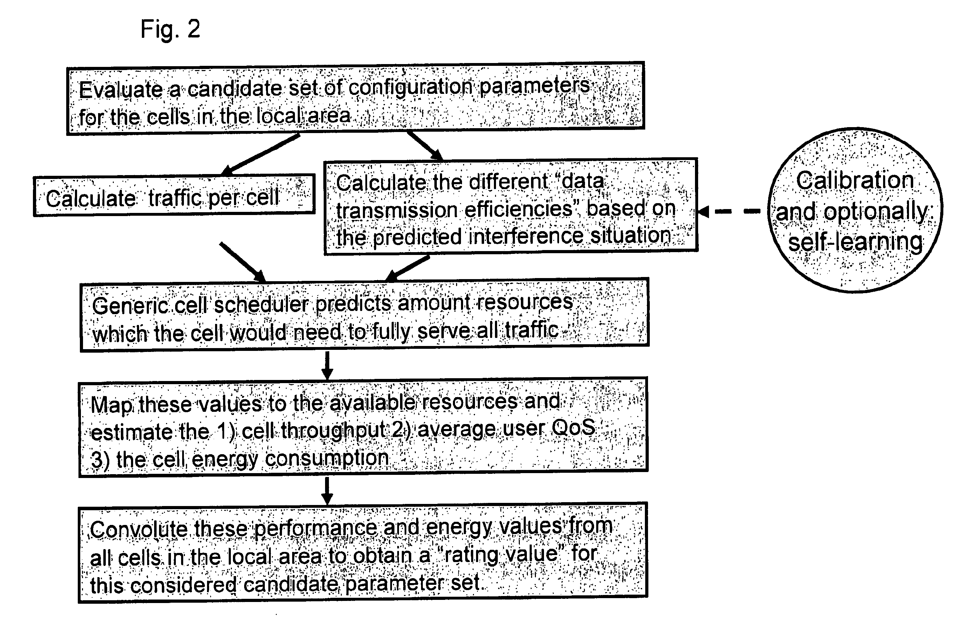

Fig. 2 is a flow diagram of method steps according to embodiments of the invention. In a first step a candidate set of configuration parameters for the cells in the local area is evaluated. The local area may for example be the plurality of cells 102 of Fig. 1. Preferably the local area is defined as a local area around a first cell. The first cell is associated with a network entity performing the method steps. The local area preferably comprises direct neighbors of the first cell and neighbors of the direct neighbors. In a second step different data transmission efficiencies are calculated based on the predicted interference situations. The predicted interference situation is simulated for the virtual sub-areas. The data transmission efficiencies indicate how much data can be transmitted by using one resource block. A resource block is a frequency range that can be used for data transmission for a predetermined time period. The calculation and simulation algorithm can be calibrated by adjusting the simulation and calibration parameters. For example if the simulated network conditions do not correspond to the real network conditions after using the candidate set for data transmissions the simulation algorithm has to be calibrated.

Optionally self-learning may be applied to this algorithm. For example the simulation algorithm can access previously acquired information in a database. The database may for example be located inside the network entity or the network entity can access an external database. The previously acquired information can be updated by the network entity in order to implement the self-learning process. For example the network entity stores information about interference conditions and traffic throughput for certain parameters. Then, when simulating the network conditions for a certain candidate set, these information can be used for simulating the network conditions.

Parallelly the traffic per cell is calculated. This may be performed by using the virtual sub-areas or it also may be performed for a cell as a whole. A generic cell scheduler then predicts amount resources which the cell would need to fully serve all traffic. Then, these values are mapped to the available resources and the cell throughput, the average user quality of service, and the cell energy consumption are estimated. These performance and energy values are convoluted from all cells in the local area to obtain a rating value for this considered candidate parameter set.

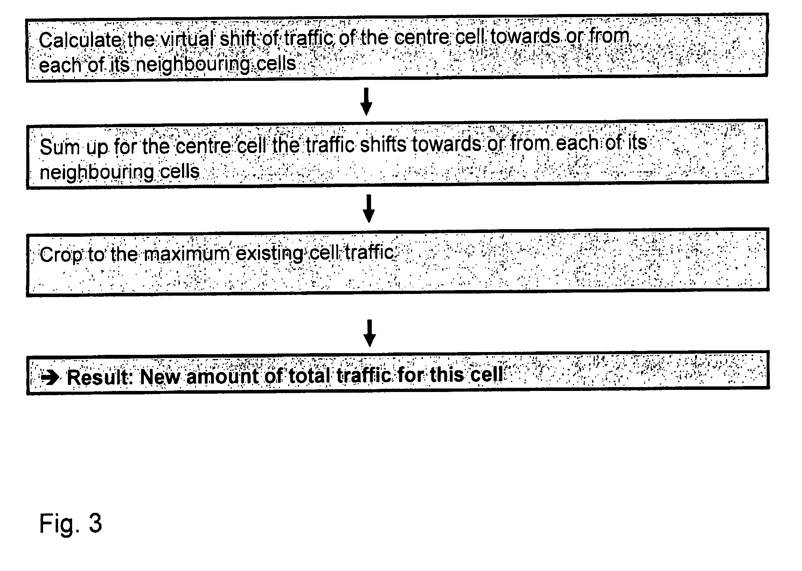

Fig. 3 is a flow diagram of method steps according to embodiments of the invention that are performed for each cell of the plurality of cells. The virtual shift of traffic of the center cell towards or from each of its neighboring cells. Traffic is shifted when cell sizes are changed. For example cell sizes are changed by changing the transmission power of the respective base station. Increasing the transmission power increases the cell size while decreasing the transmission power decreases the cell size. The change of the cell size results in the fact that mobile devices being located in that region are handed over towards the cell of which the cell size has been increased. The traffic generated by these mobile devices is shifted from the cell of which the cell size has been decreased towards the cell of which the cell size has been increased.

The traffic shifts towards or from each of its neighboring cells is summed up for the center cell. The result of the summing up is cropped to the maximum existing cell traffic in a further step, if it should occur that the calculated traffic is larger than the available traffic. This avoids shifting the cell border by too large values and eliminates rounding errors over the values from several cells. The result of the method steps depicted in Fig. 3 is a new amount of total traffic for the cell for which the method is performed. The cell for which the method is performed is preferably the cell that is associated with the network entity performing the method steps.

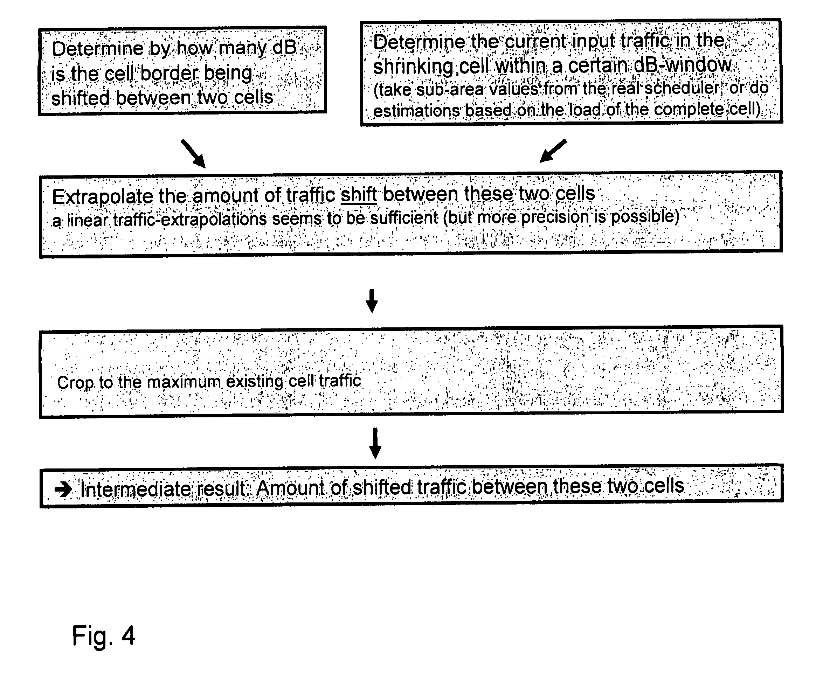

Fig. 4 is a flow diagram illustrating method steps according to embodiments of the invention. It is determined by how many db the cell border is shifted between two cells and the current traffic in the shrinking cell within a certain db window is determined. This may be performed by taking values of the virtual sub-areas from the real scheduler or by performing estimations based on the load of the complete cell. Thereafter the amount of traffic shift between these two cells is extrapolated. A linear traffic extrapolation seems to be sufficient. However, more precision is possible. Optionally the traffic shift amount may benefit from being calibrated self-learningly with the later observed real traffic shift.

These traffic shift values are cropped to the maximum existing cell traffic as explained above with respect to Fig. 3, if it should occur that the calculated traffic is larger than the available traffic. The intermediate result of these method steps is the amount of shifted traffic between these two cells.

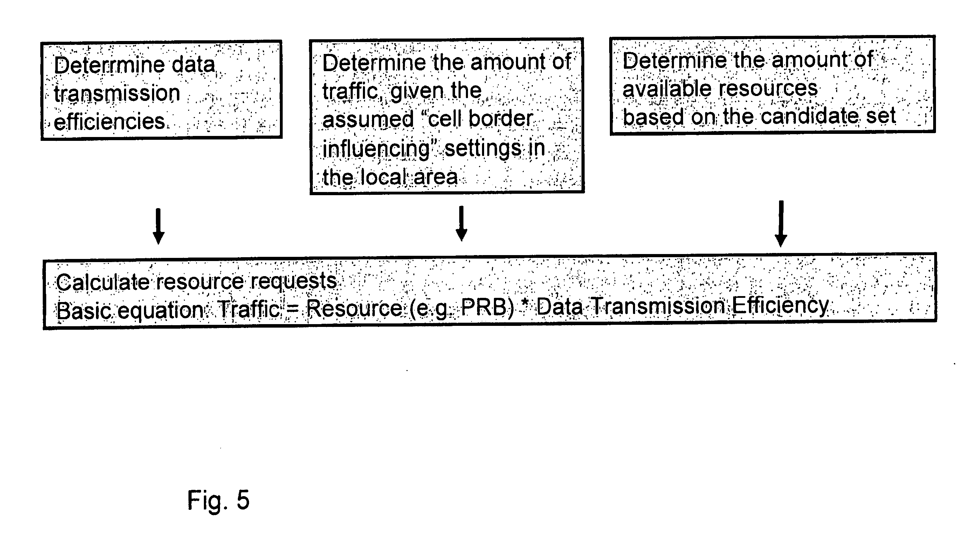

Fig. 5 is a flow diagram of method steps according to embodiments of the invention for predicting resource requests of a virtual sub-area. Data transmission efficiencies are determined. Herein data transmission efficiencies are determined by considering interference conditions. For example the data transmission efficiency is high when there are low interferences, while the data transmission efficiencies are low when there are high interferences. The amount of traffic is determined by considering the assumed cell border influencing settings in the local area. In other words, it is determined how much traffic will have to be transmitted when applying the currently simulated candidate set in the wireless digital cellular telecommunication network. Further, the amount of available resources is determined based on the candidate set for which the simulation is performed.

Based on the above mentioned method steps a resource request is calculated. The most simple equation is depicted in Fig. 5. Other equations for calculating are also possible. It is that the transmitted traffic is equal to the amount of resources (e.g. click the resource blocks) times the data transmission efficiency per resource block. It is to be noted that first of all all resources are used that offer the best possible data transmission efficiency. Only if only resources with relatively low data transmission efficiencies are available then these resources are used for data transmissions.

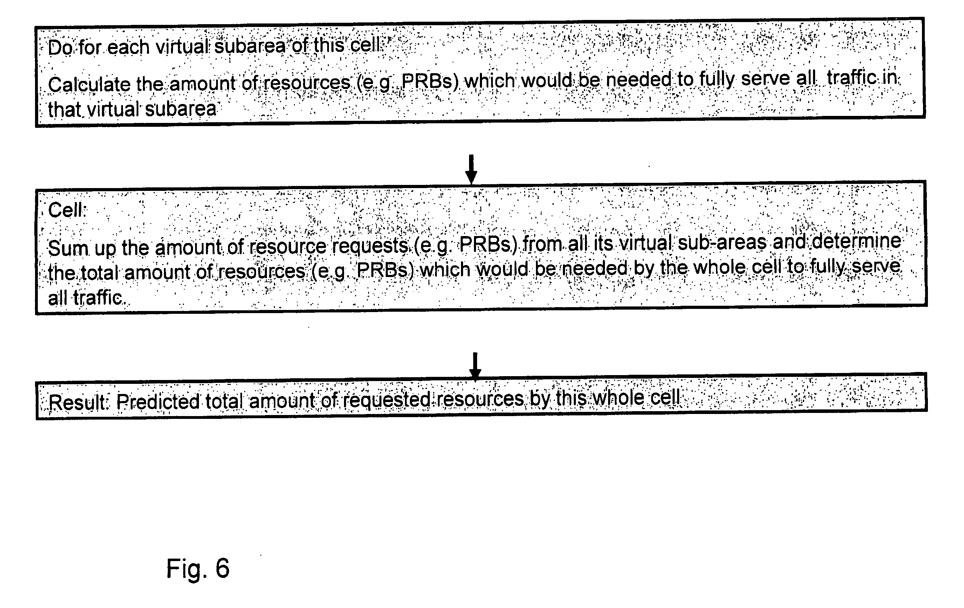

Fig. 6 is a flow diagram of method steps according to embodiments of the invention. In a first step the amount of resources (e.g. physical resource blocks) that would be needed for serving all traffic in the respective virtual sub-area is calculated. This calculation is based on the data transmission efficiencies and the inter-cell interference situation.

In a next step the amount of resource requests for each virtual sub-area of a cell is summed up for determining the amount of resource requests for the whole cell. Further, the total amount of resources that would be needed by the whole cell for serving all traffic is determined.

Optionally a self-learning procedure may be used for this method step. For example the self-learning algorithm may be that information about resource requests and the total amount of resources needed for serving all traffic is stored as information for the self-learning algorithm. This information is then used for summing up the resource requests and determining the total amount of resources for future candidate sets.

The result of these method steps described with respect of Fig. 6 is a prediction of a total amount of requested resources by the whole cell.

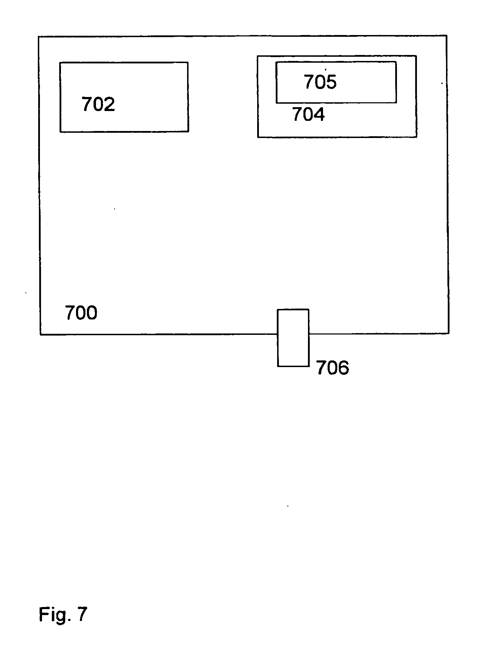

Fig. 7 is a block diagram of a network entity 700 comprising a processor 702, a storage medium 704 comprising program instructions, and an interface 706. The processor 702 is adapted for executing program instructions 705 stored in storage medium 704. The network entity 700 may communicate and exchange data via interface 706 with other base stations. Preferably, the network entity 700 is associated with one specific base station and can exchange information via interface 706 with this base station. Optionally network entity 700 can also exchange information via interface 706 with other similar network entities of the digital cellular wireless telecommunication network.

When executing the program instructions 705 the processor 702 is caused to perform a method according to embodiments of the invention. The processor 702 divides each cell of the plurality of cells into virtual sub-areas and determines traffic conditions and available resources for each virtual sub-area. Then the program instructions 705 cause the processor 702 to evaluate candidate sets of cell configuration parameters by using the determined traffic conditions and the available resources.

The processor 702 is further adapted for simulating network conditions in the virtual sub-areas for each candidate set and comparing these simulated network conditions. When executing the program instructions 705 the processor 702 is further caused to determine one of the candidate sets as the best candidate set by using the results of the comparison and to use the best candidate set for telecommunication in the plurality of cells.

### List of reference numerals

- 100: digital cellular wireless telecommunication network
- 102: cell
- 104: virtual sub-area
- 700: network entity
- 702: processor
- 704: storage medium
- 705: program instructions
- 706: interface

## Claims

1. A method for simulating network conditions for a plurality of cells (102) in a wireless cellular digital telecommunication network (100) by using several candidate sets of cell configuration parameters, wherein the method comprises:
- dividing each cell (102) of the plurality of cells into at least one virtual sub-area (104);
- determining traffic conditions and available resources for each virtual sub-area (104);
- evaluating the candidate sets of cell configuration parameters by using the determined traffic conditions and the available resources;
- simulating the network conditions in the plurality of cells (102) for each candidate set;
- comparing the simulated network conditions; and
- determining a replacement set of cell configuration parameters based on the results of the comparison;
wherein evaluating the candidate sets comprises:
- determining a traffic load for each virtual sub-area (104);
- determining an amount of required resources for each virtual sub-area (104) based on the traffic load of the respective virtual sub-area (104);
- determining at least one data transmission efficiency indicator for each virtual sub-area (104), wherein the data transmission efficiency indicator indicates how much data can be transmitted for a frequency range during a time period;
- calculating a possible data transmission traffic for each virtual sub-area (104) by using the data transmission efficiency indicator and an amount of available resources;
- evaluating the candidate sets based on a comparison between the possible data transmission traffic and the traffic load, and/or a comparison between the required resources and the available resources;
wherein simulating the network conditions comprises:
- determining an energy amount that would be consumed for data transmissions, and/or a quality of service indicator, and/or a throughput indicator, for the candidate set, for which the simulation is performed, for each virtual sub-area (104);
- determining a rating indicator for the candidate set, for which the simulation is performed, for each virtual sub-area (104) taking into account the energy amount, and/or the quality of service indicator, and/or the throughput indicator;
and wherein comparing the network conditions comprises comparing the rating indicators of the candidate sets.

2. Method according to claim 1, wherein each candidate set of cell configuration parameters comprises at least one of:
- transmission times;
- transmission frequencies;
- transmission powers;
- handover related parameters;
- antenna parameters.

3. Method according to any one of the preceding claims, wherein the network conditions comprise interferences and/or traffic load.

4. Method according to claim 3, wherein the data transmission efficiency indicator takes into account intra-cell interferences and inter-cell interferences.

5. Method according to claim 3, wherein calculating the possible data transmission traffic comprises multiplying the data transmission efficiency indicator with the number of required resources.

6. Method according to any one of the preceding claims, wherein constraints are considered when evaluating the candidate sets and when simulating the network conditions.

7. Method according to claim 6, wherein the constraints comprise at least one of:
- fixed cell configuration parameters of at least one cell (102) of the plurality of cells; and
- radio frequencies that are allowed to be used for wireless telecommunicaiton in the plurality of cells (102).

8. Method accordingto any one of the preceding claims, wherein the method is performed by a first network entity (700), wherein the first network entity (700) is associated with a first cell (102), and wherein the plurality of cells comprise the first cell (102) and a neighbouring area of the first cell (102).

9. Method according to claim 8, wherein the neighbouring area comprises direct neighbours of the first cell (102) and neighbours of the direct neighbours.

10. Method according to any one of the preceding claims, wherein information is received from base stations of the plurality of cells (102) for determining the traffic load and/or the required resources.

11. Method according to any one of the preceding claims, wherein the traffic load for each virtual sub-area (104), the at least one data transmission efficiency indicator for each virtual sub-area (104), and/or the network conditions are received from base stations.

12. Method according to any one of the preceding claims, wherein the simulation is performed based on previously performed measurments.

13. A network entity (700) of a wireless cellular digital telecommunication network (100), wherein the network entity (700) comprises:
- means (702) for dividing each cell (102) of the plurality of cells into virtual sub-areas (104);
- means (702) for determining traffic conditions and available resources for each virtual sub-area (104);
- means (702) for evaluating the candidate sets of cell configuration parameters by using the determined traffic conditions and the available resources;
- means (702) for simulating the network conditions in the virtual sub-areas (104) for each candidate set;
- means (702) for comparing the simulated network conditions;
- means (702) for determining one of the candidate sets as the best candidate set by using the results of the comparison; and
- means (702) for using the best candidate set for telecommunication in the plurality of cells (102);
wherein evaluating the candidate sets comprises:
- determining a traffic load for each virtual sub-area (104);
- determining an amount of required resources for each virtual sub-area (104) based on the traffic load of the respective virtual sub-area (104);
- determining at least one data transmission efficiency indicator for each virtual sub-area (104), wherein the data transmission efficiency indicator indicates how much data can be transmitted for a frequency range during a time period;
- calculating a possible data transmission traffic for each virtual sub-area (104) by using the data transmission efficiency indicator and an amount of available resources;
- evaluating the candidate sets based on a comparison between the possible data transmission traffic and the traffic load, and/or a comparison between the required resources and the available resources;
wherein simulating the network conditions comprises:
- determining an energy amount that would be consumed for data transmissions, and/or a quality of service indicator, and/or a throughput indicator, for the candidate set, for wich the simulation is performed, for each virtual sub-area (104);
- determining a rating indicator for the candidate set, for which the simulation is performed, for each virtual sub-area (104) taking into account the energy amount, and/or the quality of service indicator, and/or the throughput indicator;
and wherein comparing the network conditions comprises comparing the rating indicators of the candidate sets.

14. A computer program product (705) comprising instructions (704) that when being executed cause a network entity (700) to perform a method according to any one of the claims 1-12.

## Patentansprüche

1. Verfahren zur Simulation von Netzwerkbedingungen für eine Vielzahl von Zellen (102) in einem drahtlosen digitalen zellularen Telekommunikationsnetzwerk (100) unter Verwendung mehrerer Kandidatensätze von Zellkonfigurationsparametern, wobei das Verfahren umfasst:
- Unterteilen einer jeden Zelle (102) der Vielzahl von Zellen in mindestens einen virtuellen Teilbereich (104);
- Ermitteln von Verkehrsbedingungen und verfügbaren Ressourcen für jeden virtuellen Teilbereich (104);
- Auswerten der Kandidatensätze von Zellkonfigurationsparametern unter Verwendung der ermittelten Verkehrsbedingungen und der verfügbaren Ressourcen;
- Simulieren der Netzwerkbedingungen in der Vielzahl von Zellen (102) für jeden Kandidatensatz;
- Vergleichen der simulierten Netzwerkbedingungen; und
- Ermitteln eines Ersatzsatzes von Zellkonfigurationsparametern auf der Basis der Ergebnisse des Vergleichs;
wobei das Auswerten der Kandidatensätze umfasst:
- Ermitteln einer Verkehrslast für jeden virtuellen Teilbereich (104);
- Ermitteln einer Menge von erforderlichen Ressourcen für jeden virtuellen Teilbereich (104) auf der Basis der Verkehrslast des jeweiligen virtuellen Teilbereichs (104);
- Ermitteln mindestens eines Datenübertragungseffizienzindikators für jeden virtuellen Teilbereich (104), wobei der Datenübertragungseffizienzindikator anzeigt, welche Datenmenge für einen Frequenzbereich während einer Zeitspanne übertragen werden kann;
- Berechnen eines möglichen Datenübertragungsverkehrs für jeden virtuellen Teilbereich (104) unter Verwendung des Datenübertragungseffizienzindikators und einer Menge von verfügbaren Ressourcen;
- Auswerten der Kandidatensätze auf der Basis eines Vergleichs zwischen dem möglichen Datenübertragungsverkehr und der Verkehrslast, und/oder eines Vergleichs zwischen den erforderlichen Ressourcen und den verfügbaren Ressourcen;
wobei das Simulieren der Netzwerkbedingungen umfasst:
- Ermitteln einer Energiemenge, die für Datenübertragungen verbraucht werden würde; und/oder eines Dienstgüteindikators, und/oder eines Durchsatzindikators für denjenigen Kandidatensatz, für welchen die Simulation durchgeführt wird, für jeden virtuellen Teilbereich (104);
- Ermitteln eines Bewertungsindikators für den Kandidatensatz, für welchen die Simulation durchgeführt wird, für jeden virtuellen Teilbereich (104) unter Berücksichtigung der Energiemenge, und/oder des Dienstgüteindikators, und/oder des Durchsatzindikators;
und wobei das Vergleichen der Netzwerkbedingungen das Vergleichen der Bewertungsindikatoren der Kandidatensätze umfasst.

2. Verfahren nach Anspruch 1, wobei jeder Kandidatensatz von Zellkonfigurationsparametern mindestens einen der folgenden Parameter umfasst:
- Übertragungszeiten;
- Übertragungsfrequenzen;
- Übertragungsleistungen;
- Übergabebedingte Parameter;
- Antennenparameter.

3. Verfahren nach einem beliebigen der vorstehenden Ansprüche, wobei die Netzwerkbedingungen Interferenzen und/oder die Verkehrslast umfassen.

4. Verfahren nach Anspruch 3, wobei der Datenübertragungseffizienzindikator Intrazell-Interferenzen und Interzell-Interferenzen berücksichtigt.

5. Verfahren nach Anspruch 3, wobei das Berechnen des möglichen Datenübertragungsverkehrs das Multiplizieren des Datenübertragungseffizienzindikators mit der Anzahl der erforderlichen Ressourcen umfasst.

6. Verfahren nach einem beliebigen der vorstehenden Ansprüche, wobei bei der Auswertung der Kandidatensätze und bei der Simulation der Netzwerkbedingungen Nebenbedingungen berücksichtigt werden.

7. Verfahren nach Anspruch 6, wobei die Nebenbedingungen mindestens eine der folgenden umfassen:
- Unveränderliche Zellkonfigurationsparameter mindestens einer Zelle (102) der Vielzahl von Zellen; und
- Funkfrequenzen, deren Nutzung für die drahtlose Telekommunikation in der Vielzahl von Zellen (102) zulässig ist.

8. Verfahren nach einem beliebigen der vorstehenden Ansprüche, wobei das Verfahren durch eine erste Netzwerkentität (700) durchgeführt wird, wobei die erste Netzwerkentität (700) mit einer ersten Zelle (102) assoziiert ist, und wobei die Vielzahl von Zellen eine erste Zelle (102) und einen benachbarten Bereich der ersten Zelle (102) umfasst.

9. Verfahren nach Anspruch 8, wobei der benachbarte Bereich direkte Nachbarn der ersten Zelle (102) und Nachbarn der direkten Nachbarn umfasst.

10. Verfahren nach einem beliebigen der vorstehenden Ansprüche, wobei Informationen für die Ermittlung der Verkehrslast und/oder der erforderlichen Ressourcen von Basisstationen der Vielzahl von Zellen (102) empfangen werden.

11. Verfahren nach einem beliebigen der vorstehenden Ansprüche, wobei die Verkehrslast für jeden virtuellen Teilbereich (104), der mindestens eine Datenübertragungseffizienzindikator für jeden virtuellen Teilbereich (104) und/oder die Netzwerkbedingungen von Basisstationen empfangen werden.

12. Verfahren nach einem beliebigen der vorstehenden Ansprüche, wobei die Simulation auf der Basis von zuvor vorgenommenen Messungen durchgeführt wird.

13. Netzwerkentität (700) eines drahtlosen digitalen zellularen Telekommunikationsnetzwerks (100), wobei die Netzwerkentität (700) umfasst:
- Mittel (702) zum Unterteilen einer jeden Zelle (102) der Vielzahl von Zellen in virtuelle Teilbereiche (104);
- Mittel (702) zum Ermitteln von Verkehrsbedingungen und verfügbaren Ressourcen für jeden virtuellen Teilbereich (104);
- Mittel (702) zum Auswerten der Kandidatensätze von Zellkonfigurationsparametern unter Verwendung der ermittelten Verkehrsbedingungen und der verfügbaren Ressourcen;
- Mittel (702) zum Simulieren der Netzwerkbedingungen in den virtuellen Teilbereichen (104) für jeden Kandidatensatz;
- Mittel (702) zum Vergleichen der simulierten Netzwerkbedingungen;
- Mittel (702) zum Ermitteln eines der Kandidatensätze als den besten Kandidatensatz unter Verwendung der Ergebnisse des Vergleichs; und
- Mittel (702) zum Verwenden des besten Kandidatensatzes für die Telekommunikation in der Vielzahl von Zellen (102);
wobei das Auswerten der Kandidatensätze umfasst:
- Ermitteln einer Verkehrslast für jeden virtuellen Teilbereich (104);
- Ermitteln einer Menge von erforderlichen Ressourcen für jeden virtuellen Teilbereich (104) auf der Basis der Verkehrslast des jeweiligen virtuellen Teilbereichs (104);
- Ermitteln mindestens eines Datenübertragungseffizienzindikators für jeden virtuellen Teilbereich (104), wobei der Datenübertragungseffizienzindikator anzeigt, welche Datenmenge für einen Frequenzbereich während einer Zeitspanne übertragen werden kann;
- Berechnen eines möglichen Datenübertragungsverkehrs für jeden virtuellen Teilbereich (104) unter Verwendung des Datenübertragungseffizienzindikators und einer Menge von verfügbaren Ressourcen;
- Auswerten der Kandidatensätze auf der Basis eines Vergleichs zwischen dem möglichen Datenübertragungsverkehr und der Verkehrslast, und/oder eines Vergleichs zwischen den erforderlichen Ressourcen und den verfügbaren Ressourcen;
wobei das Simulieren der Netzwerkbedingungen umfasst:
- Ermitteln einer Energiemenge, die für Datenübertragungen verbraucht werden würde; und/oder eines Dienstgüteindikators, und/oder eines Durchsatzindikators, für denjenigen Kandidatensatz, für welchen die Simulation durchgeführt wird, für jeden virtuellen Teilbereich (104);
- Ermitteln eines Bewertungsindikators für den Kandidatensatz, für welchen die Simulation durchgeführt wird, für jeden virtuellen Teilbereich (104) unter Berücksichtigung der Energiemenge, und/oder des Dienstgüteindikators, und/oder des Durchsatzindikators;
und wobei das Vergleichen der Netzwerkbedingungen das Vergleich der Bewertungsindikatoren der Kandidatensätze umfasst.

14. Computerprogramm-Produkt (705) mit Befehlen (704), welche bei der Ausführung bewirken, dass eine Netzwerkentität (700) ein Verfahren gemäß einem beliebigen der Ansprüche 1-12 durchführt.

## Revendications

1. Procédé pour simuler des conditions de réseau pour une pluralité de cellules (102) dans un réseau de télécommunication cellulaire numérique sans fil (100) en utilisant plusieurs ensembles candidats de paramètres de configuration de cellule, le procédé comprenant les étapes suivantes :
- diviser chaque cellule (102) parmi la pluralité de cellules en au moins une sous-zone virtuelle (104) ;
- déterminer des conditions de trafic et des ressources disponibles pour chaque sous-zone virtuelle (104) ;
- évaluer les ensembles candidats de paramètres de configuration de cellule en utilisant les conditions de trafic et les ressources disponibles déterminées ;
- simuler les conditions de réseau dans la pluralité de cellules (102) pour chaque ensemble candidat ;
- comparer les conditions de réseau simulées ; et
- déterminer un ensemble de remplacement de paramètres de configuration de cellule sur la base des résultats de la comparaison ;
l'évaluation des ensembles candidats comprenant les étapes suivantes :
- déterminer une charge de trafic pour chaque sous-zone virtuelle (104) ;
- déterminer une quantité de ressources requises pour chaque sous-zone virtuelle (104) sur la base de la charge de trafic de la sous-zone virtuelle respective (104) ;
- déterminer au moins un indicateur de l'efficacité de transmission de données pour chaque sous-zone virtuelle (104), l'indicateur de l'efficacité de transmission de données indiquant la quantité de données pouvant être transmise pour une plage de fréquences durant une période donnée ;
- calculer un trafic de transmission de données possible pour chaque sous-zone virtuelle (104) en utilisant l'indicateur de l'efficacité de transmission de données et une quantité de ressources disponibles ;
- évaluer les ensembles candidats sur la base d'une comparaison entre le trafic de transmission de données possible et la charge de trafic, et/ou d'une comparaison entre les ressources requises et les ressources disponibles ;
la simulation des conditions de réseau comprenant les étapes suivantes :
- déterminer une quantité d'énergie qui serait consommée pour des transmissions de données, et/ou un indicateur de la qualité de service, et/ou un indicateur de débit, pour l'ensemble candidat, pour lequel la simulation est exécutée, pour chaque sous-zone virtuelle (104) ;
- déterminer un indicateur d'évaluation pour l'ensemble candidat, pour lequel la simulation est exécutée, pour chaque sous-zone virtuelle (104) en prenant en compte la quantité d'énergie et/ou l'indicateur de la qualité de service et/ou l'indicateur de débit ;
la comparaison des conditions de réseau comprenant la comparaison des indicateurs d'évaluation des ensembles candidats.

2. Procédé selon la revendication 1, dans lequel chaque ensemble candidat de paramètres de configuration de cellule comprend au moins un élément parmi :
- des temps de transmission ;
- des fréquences de transmission ;
- des puissances de transmission ;
- des paramètres liés au transfert ;
- des paramètres d'antenne.

3. Procédé selon l'une quelconque des revendications précédentes, dans lequel les conditions de réseau comprennent des interférences et/ou une charge de trafic.

4. Procédé selon la revendication 3, dans lequel l'indicateur de l'efficacité de transmission de données prend en compte des interférences intracellulaires et des interférences intercellulaires.

5. Procédé selon la revendication 3, dans lequel le calcul du trafic de transmission de données possible comprend la multiplication de l'indicateur de l'efficacité de transmission de données par le nombre de ressources requises.

6. Procédé selon l'une quelconque des revendications précédentes, dans lequel des contraintes sont considérées lors de l'évaluation des ensembles candidats et lors de la simulation des conditions de réseau.

7. Procédé selon la revendication 6, dans lequel les contraintes comprennent au moins un élément parmi :
- des paramètres de configuration de cellule fixes d'au moins une cellule (102) parmi la pluralité de cellules ; et
- des radiofréquences qui peuvent être utilisées pour une télécommunication sans fil dans la pluralité de cellules (102).

8. Procédé selon l'une quelconque des revendications précédentes, le procédé étant exécuté par une première entité de réseau (700), la première entité de réseau (700) étant associée à une première cellule (102), et la pluralité de cellules comprenant la première cellule (102) et une zone voisine de la première cellule (102).

9. Procédé selon la revendication 8, dans lequel la zone voisine comprend des voisins directs de la première cellule (102) et des voisins des voisins directs.

10. Procédé selon l'une quelconque des revendications précédentes, dans lequel des informations proviennent de stations de base de la pluralité de cellules (102) pour déterminer la charge de trafic et/ou les ressources requises.

11. Procédé selon l'une quelconque des revendications précédentes, dans lequel la charge de trafic pour chaque sous-zone virtuelle (104), l'au moins un indicateur de l'efficacité de transmission de données pour chaque sous-zone virtuelle (104) et/ou les conditions de réseau proviennent de stations de base.

12. Procédé selon l'une quelconque des revendications précédentes, dans lequel la simulation est exécutée sur la base de mesures effectuées précédemment.

13. Entité de réseau (700) d'un réseau de télécommunication cellulaire numérique sans fil (100), l'entité de réseau (700) comprenant :
- des moyens (702) pour diviser chaque cellule (102) parmi la pluralité de cellules en sous-zones virtuelles (104) ;
- des moyens (702) pour déterminer des conditions de trafic et des ressources disponibles pour chaque sous-zone virtuelle (104) ;
- des moyens (702) pour évaluer les ensembles candidats de paramètres de configuration de cellule en utilisant les conditions de trafic et les ressources disponibles déterminées ;
- des moyens (702) pour simuler les conditions de réseau dans les sous-zones virtuelles (104) pour chaque ensemble candidat ;
- des moyens (702) pour comparer les conditions de réseau simulées ;
- des moyens (702) pour déterminer un des ensembles candidats en tant que meilleur ensemble candidat en utilisant les résultats de la comparaison ; et
- des moyens (702) pour utiliser le meilleur ensemble candidat pour la télécommunication dans la pluralité de cellules (102) ;
l'évaluation des ensembles candidats comprenant les étapes suivantes :
- déterminer une charge de trafic pour chaque sous-zone virtuelle (104) ;
- déterminer une quantité de ressources requises pour chaque sous-zone virtuelle (104) sur la base de la charge de trafic de la sous-zone virtuelle respective (104) ;
- déterminer au moins un indicateur de l'efficacité de transmission de données pour chaque sous-zone virtuelle (104), l'indicateur de l'efficacité de transmission de données indiquant la quantité de données pouvant être transmise pour une plage de fréquences durant une période donnée ;
- calculer un trafic de transmission de données possible pour chaque sous-zone virtuelle (104) en utilisant l'indicateur de l'efficacité de transmission de données et une quantité de ressources disponibles ;
- évaluer les ensembles candidats sur la base d'une comparaison entre le trafic de transmission de données possible et la charge de trafic, et/ou d'une comparaison entre les ressources requises et les ressources disponibles ;
la simulation des conditions de réseau comprenant les étapes suivantes :
- déterminer une quantité d'énergie qui serait consommée pour des transmissions de données, et/ou un indicateur de la qualité de service, et/ou un indicateur de débit, pour l'ensemble candidat, pour lequel la simulation est exécutée, pour chaque sous-zone virtuelle (104) ;
- déterminer un indicateur d'évaluation pour l'ensemble candidat, pour lequel la simulation est exécutée, pour chaque sous-zone virtuelle (104) en prenant en compte la quantité d'énergie et/ou l'indicateur de la qualité de service et/ou l'indicateur de débit ;
la comparaison des conditions de réseau comprenant la comparaison des indicateurs d'évaluation des ensembles candidats.

14. Produit de programme informatique (705) comprenant des instructions (704) qui, lorsqu'elles sont exécutées, entraînent l'exécution par une entité de réseau (700) d'un procédé selon l'une quelconque des revendications 1 à 12.
